# EUROPEAN PATENT SPECIFICATION

(11) **EP 1 810 876 B1**
(45) Date of publication and mention of the grant of the patent: **30.06.2010**
(21) Application number: 04773023.9
(22) Date of filing: 14.09.2004
(51) Int. Cl.: B60N 2/38, E02F 9/00, B60R 7/04, B60N 2/24

(54) **WORK VEHICLE WITH AN OPERATOR'S SEAT**
ARBEITSFAHRZEUG MIT EINEM BEDIENERSITZ
VÉHICULE FONCTIONNEL AVEC UN SIÈGE DE CONDUCTEUR

(30) Priority: 24.08.2004 JP 2004244475
(43) Date of publication of application: 25.07.2007
(73) Proprietor: Yanmar Co., Ltd., Osaka-shi, Osaka 530-0013 (JP)
(72) Inventor: AYABE, Hiroaki, Osaka-shi 530-0013 Osaka (JP)
(74) Representative: Jostarndt, Hans-Dieter
(86) International application number: PCT/JP2004/013341
(87) International publication number: WO 2006/022030

(56) References cited:
- EP-A- 0 917 983
- JP-A- 5 229 377
- JP-A- 2001 253 280
- JP-U- 63 128 151
- US-A- 3 257 013
- US-A- 3 933 259
- US-A- 4 014 507
- US-A- 6 135 412

## Description

### TECHNICAL FIELD

The present invention relates to a structure of a rotatable seat arranged in a work vehicle.

### BACKGROUND ART

A work vehicle called Backhoe Loader is conventionally known in which a front loader is attached to the front part of the tractor vehicle body, and a backhoe is attached to the back part.

In such work vehicle, a seat frame is generally formed into a box shape, and access to under the seat frame in time of maintenance is made by removing the cover configured into a great number of layers. The space under the seat is formed narrow since the seat frame is a box shape.

Furthermore, a storage part for storing instruction manual and the like is installed on the back surface of the operator's seat or on the side of the seat in the conventional work vehicle.

Japanese Laid-Open Patent Publication No. 5-22937 (Patent document 1) discloses one example of an operator's seat of the backhoe loader.

In the backhoe loader disclosed in the Patent document 1, the operator's seat is arranged in a freely forward and backward reversely rotatable manner on a tractor vehicle body by way of a reverse rotation support device, where the operator's seat faces the front when the tractor is traveling or when using the front loader, and the operator's seat faces the back when using the backhoe according to the reverse rotation support device. The reverse rotation device of the operator's seat is configured by parallel links and a turntable.

Piping cannot be arranged in the vicinity of the operator's seat since the operator's seat is reversely rotated by a complex mechanism.

However, in the tractor disclosed in patent document 1, the space between the operator's seat and a safety frame is narrow, it is troublesome when the operator reversely rotates the operator's seat and again sits on the operator's seat, and the reversing rotation of the operator's seat is very laborious. In particular, labor is required to again sit on the reversely rotated operator' s seat in the tractor in which a canopy is configured around the operator's seat.

Furthermore, taking out from and putting in to the storage part become difficult if the storage part is arranged around the operator's seat or on the back surface of the operator's seat. If the storage part is arranged on the side of the operator's seat, there is a possibility that the storage part may be invisible when reversely rotating the operator's seat. If the storage part is arranged on the back surface of a backrest of the operator' s seat, taking out from and putting in to the storage part become difficult.
Furthermore, U.S. Patent No. 4,014,507 also describes an operator's seat of a working vehicle with a support member disposed on a machine frame of the work vehicle. Thereby, the operator's seat is rotatably mounted on the support member and the seat surface of the operator's seat is mounted slidable towards front and back.
Storage parts rotated together with an operator's seat are known from European Patent Application EP 0 917 983 A1, for example, which describes a rotatable seat for a vehicle.
Thereby, U.S. Patent No. 3,933,259 discloses a side-shift backhoe with holding parts of hydraulic hoses being installed on the support member of an operator's seat.

Document JP-A-61-205562 discloses a work vehicle according to the preamble of claim 1.

### DISCLOSURE OF THE INVENTION

### PROBLEMS TO BE SOLVED BY THE INVENTION

The object of the present invention includes increasing storability around the operator's seat of a work vehicle and reducing labor for reverse rotation in the work vehicle in which the operator's seat is formed to be reversely rotatable.

### MEANS FOR SOLVING THE PROBLEMS

The invention is defined by the features set forth in claim 1.

Further features of the invention are disclosed in the dependent claims.

Furthermore, in the present invention, a storage part rotated together with the operator's seat is installed on a front lower seat surface of the operator's seat.

Moreover, in the present invention, holding parts of hydraulic hose are installed on the operator's seat support member; and the hydraulic hose is held along the side face of the operator's seat support member.

### EFECT OF THE INVENTION

In the present invention, an operator's seat support member comprising a beam and a seat pillar is disposed on a machine frame of the work vehicle; the operator's seat is rotatably formed on the operator's seat stand frame; a seat surface of the operator's seat is formed slidable towards the front and the back; and the seat index point of the operator's seat serving as the center position of the sliding range of the operator's seat is approximately coaxial with the rotating center axis of the operator's seat, and thus the structure of the operator's seat is simplified, and the assembility of the operator's seat and the support member is enhanced. The access under the operator's seat is facilitated, and the operator's seat can be rotated while sitting thereon through a natural operation when rotating the driver's seat.

Furthermore, in the present invention, a storage part rotated together with the operator's seat is installed on a front lower seat surface of the operator's seat, and thus access to the storage part from the sitting state is facilitated irrespective of the position of the operator's seat. Moreover, in the present invention, holding parts for hydraulic hose are installed on the beam of the operator's seat support member; and the hydraulic hose is held along the side face of the beam of the operator's seat support member, and thus replacement of the hydraulic hose of the work machine is facilitated, and maintenance of the hydraulic path is enhanced.

### BRIEF DESCRIPTION OF THE DRAWINGS

Fig. 1 is a side view of the entire backhoe loader including a canopy with an operator's seat.
Fig. 2 is a plan view showing a frame structure of a canopy and an operator's seat.
Fig. 3 is a side view showing a frame structure of a canopy and an operator's seat.
Fig. 4 is a perspective view showing a frame structure of a canopy and an operator's seat.
Fig. 5 is a plan view showing a structure of a top frame and an operator's seat.
Fig. 6 is a perspective view showing the structure of the operator's seat and a piping mechanism.
Fig. 7 is an exploded perspective view showing the structure of the operator's seat.
Fig. 8 is a cross sectional side view of an operator's seat support structure.
Fig. 9 is a view showing the position relationship between the steering control device and the seat.
Fig. 10 is a view showing a structure of the front and back position adjustment of the seat and the seat rotation.

### EXPLANATION OF SYMBOLS

- 1: work vehicle
- 5: canopy
- 9: seat
- 10: operation unit
- 11: seat pillar
- 12: vehicle body frame
- 13: beam
- 22: stand frame
- 22b: storage part

### BEST MODE FOR CARRYING OUT THE INVENTION

In the operator's seat arranged in the work vehicle, the operator's seat is formed to be rotatable, and the storage part is installed on the front lower seat surface of the operator' s seat, where the rotating center of the seat is coaxial with the reference point of the seat in the rotatable operator's seat. Piping is arranged exterior to the frame in the vicinity of the operator's seat to simplify the piping configuration.

An example of the present invention will now be described using the figures.

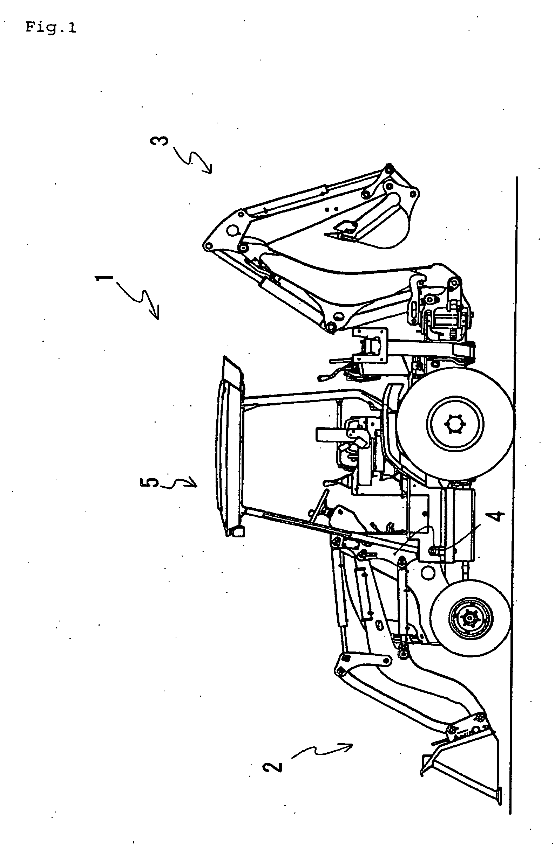

Fig. 1 is a side view of the entire backhoe loader including a canopy.

The work vehicle 1 is a backhoe loader, where the loader 2 serving as a loading device and a excavating device 3 are attached to the work vehicle 1. A bracket 4 is arranged on both left and right sides of the bonnet of the work vehicle 1, which bracket 4 is fixed to the vehicle body frame of the work vehicle 1.

A canopy 5 is arranged on the vehicle body frame, and the operator operates the work vehicle in the canopy 5.

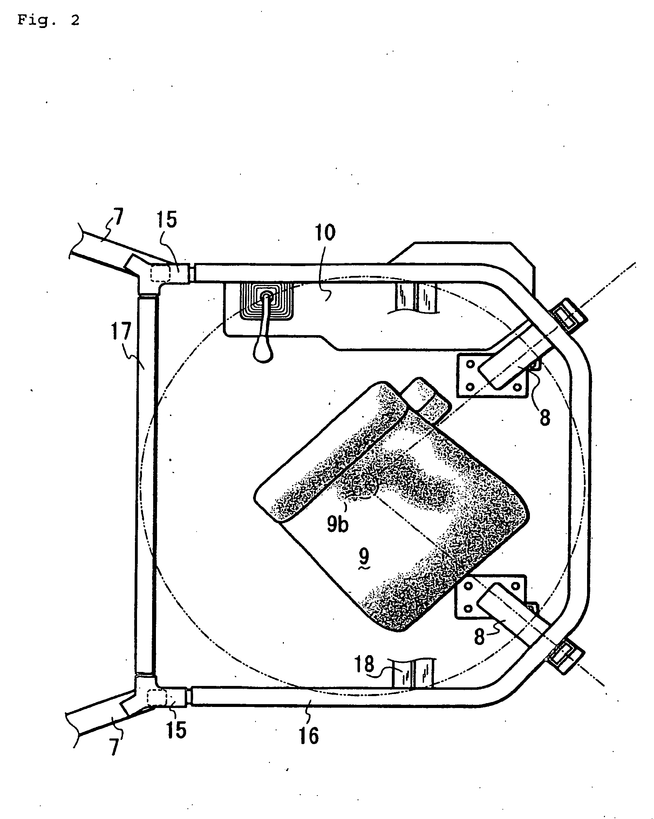

The structure of the frame configuring the canopy will now be described using Figs. 2 to 4.

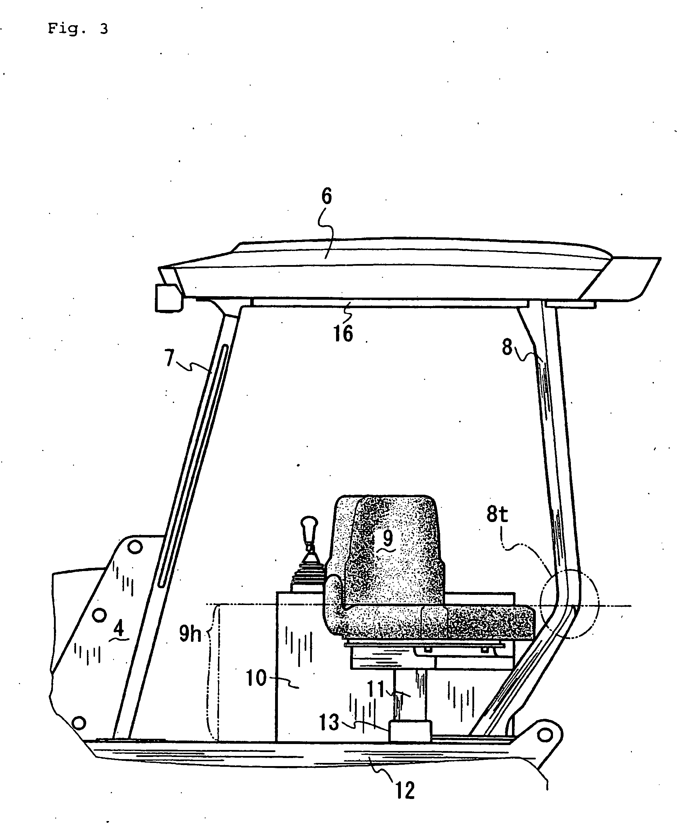

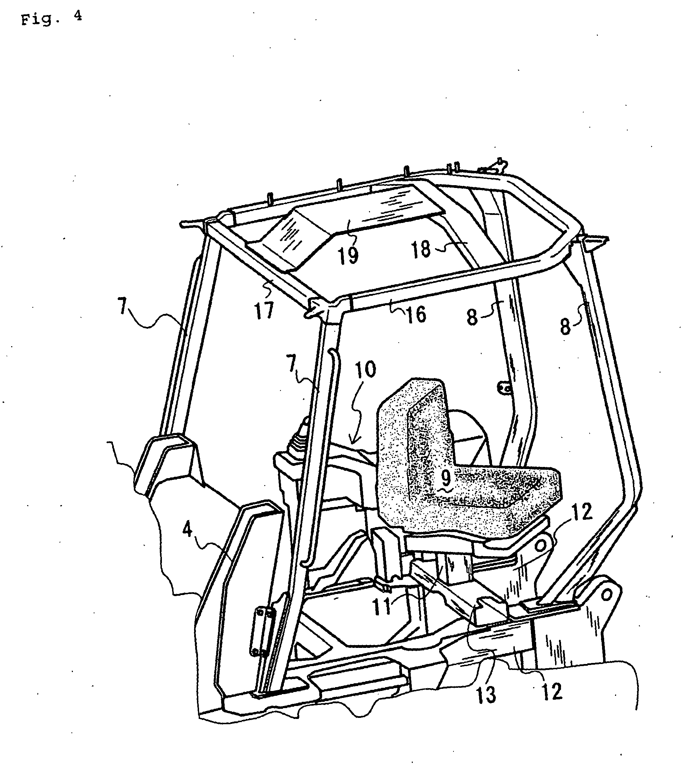

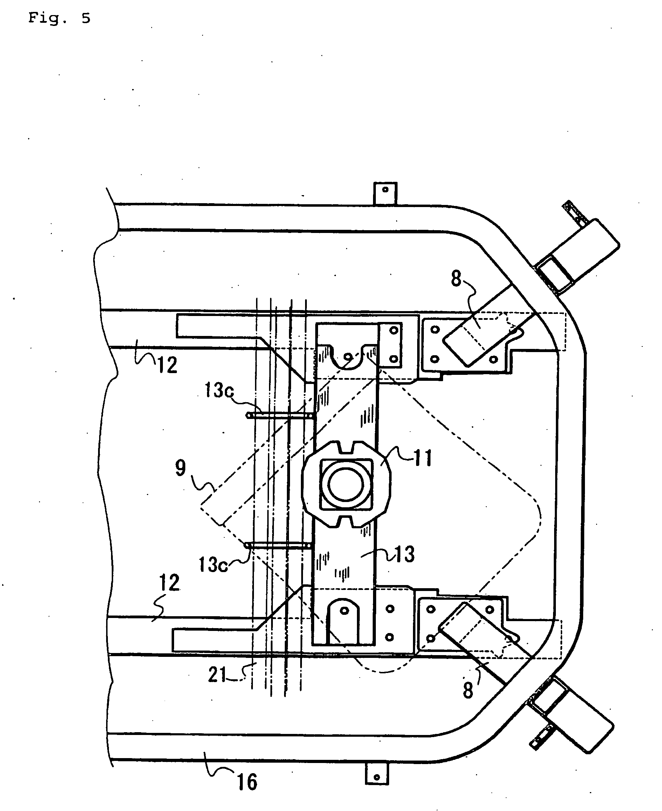

Fig. 2 is a plan view showing the frame structure of the canopy, Fig. 3 is a side view of the same, Fig. 4 is a perspective view of the same, and Fig. 5 is a plan view showing the structure of the top plate.

The canopy 5 is configured by front frames 7, 7, rear frames 8, 8, a top frame 16, and a front top frame 17. The front frame 7, the rear frame 8, the top frame 16, and the front top frame 17 are formed by square pipes, so that each frame is easily molded, and members are easily connected and arranged to each frame.

The front frames 7, 7 and the rear frames 8, 8 are respectively connected by the top frame 16 at the upper end. The top frame 16 is formed into a U-shape in plan view, and an opening is formed facing the front side, which the opening side of the top frame 16 is closed by bridging the front top frame 17. The front frames 7, the top frame 16 and the front top frame 17 are connected by one joint 15.

A roof 6 is arranged on the top frame 16. A reinforcement frame 18 is arranged in the left and right direction at the center of the top frame 16, and a top plate 19 is arranged between the front top frame 17 and the reinforcement frame 18. The roof 6 is arranged on the top plate 19.

The canopy 5 is attached to the vehicle body frame 12 of the work vehicle. The lower ends of the front frames 7 and the rear frames 8 are fixed to the vehicle body frame 12 arranged in the front and back direction of the work vehicle.

A seat 9 on which the operator sits and the operation unit 10 of the work machine are arranged in the canopy 5, the seat 9 being positioned approximately in the center of the canopy 5. The operation unit 10 is positioned on the side of the seat 9. The operation unit 10 is attached to the vehicle body frame 12, and operation tools of the work machine such as operation lever is arranged at the upper part of the operation unit 10.

The seat 9 is arranged by way of a seat pillar 11 on a beam 13 bridged between the left and right vehicle body frames 12 arranged in the front and back direction. The seat pillar 11 is positioned on the shaft center of the rotation shaft 9b of the seat 9, the seat pillar 11 supporting the seat 9 in a freely rotatable manner. The operator rotates the seat 9 while sitting on the seat 9 and reversely rotates the seat 9 from the front towards the back or from the back towards the front.

The front frames 7 are arranged in the up and down direction at the front part of the canopy 5 . The front frames 7 are arranged with the upper ends tilted towards the rear side, and the lower parts of the front frames 7 are also fixed to the bracket 4 for supporting the front loader of the work vehicle.

The rear frames 8 are arranged in the up and down direction at the back part of the canopy 5. The rear frames 8 at the back part of the canopy 5 have a configuration having the lower parts extended diagonally upward towards the rear side, bent and then extended diagonally slightly towards the front side. The bent point 8t of the rear frame 8 has a structure approximately aligned with the height 9h of the seat surface of the seat 9, so that the foot space of the operator sitting on the seat 9 is ensured.

Since the bent point 8t of the rear frame 8 is positioned at the height 9h of the seat surface of the seat 9, the bent point 8t most distant from the seat 9 in the rear frame 8 becomes equal to the position of the knee of the operator sitting on the seat 9. Thus, the rear frames 8 avoid the knee of the operator when the seat 9 is reversely rotated, thereby facilitating the reverse rotation while sitting on the seat 9.

The flat surface on the seat 9 side of the rear frame 8 is orthogonal to the line connecting the rotating shaft 9b of the seat 9 and the rear frame 8, and the flat surface on the seat 9 side of the rear frame 8 is parallel to the tangent line of a circle having the rotating shaft 9b as the center at the arrangement position of the rear frame 8. Therefore, the projection towards the seat 9 of the frame 8 is eliminated, and the operator is less likely to hit the frame 8 with his/her leg when reversely rotating the seat 9. The flat surface on the seat 9 side of the rear frame 8 is a flat surface in the longitudinal side in cross sectional view of the square pipe forming the rear frame 8, and thus resistance force in the front and back direction and left and right direction, and furthermore, in the twist direction is exhibited by arranging the rear frame 8.

The foot space of the operator is ensured, the operator is able to rotate the seat 9 while sitting thereon, and the strength of the canopy 5 is increased since the frame 8 is radially arranged with the rotating shaft 9b of the seat 9 as the center in plan view. The rigidity to the force in the transverse direction and the load in the front and back direction applied to the canopy 5 is obtained by arranging the rear frame 8 in the above manner.

The top frame 16 is formed into a shape that lies substantially along the tangent line of the circumference of the rotation of the seat 9, and configures the surface facing the back, surfaces facing the left and the right, and the surface diagonally facing the rear side at the back part of the canopy 5. The rear frames 8 can be easily arranged radially from the rotating center of the seat 9, the connection between the rear frame 8 and the top frame 16 is facilitated, and the connection between the rear frames 8 and the top frame 16 is easily performed by configuring the top frame 16 in such manner.

The rear frame 8 is arranged radially with respect to the seat 9 in plan view, the concave side portion of the bent rear frame 8 is faced towards the seat 9, and the back part of the top frame 16 is formed into a circumferential shape that aligns with the rotating center of the seat 9, and thus the volume of the canopy 5 is increased, the distance between the frames is shortened, and a sufficient rigidity is provided to the canopy 5. That is, the canopy 5 can be miniaturized while enhancing the interior comfort of the canopy 5.

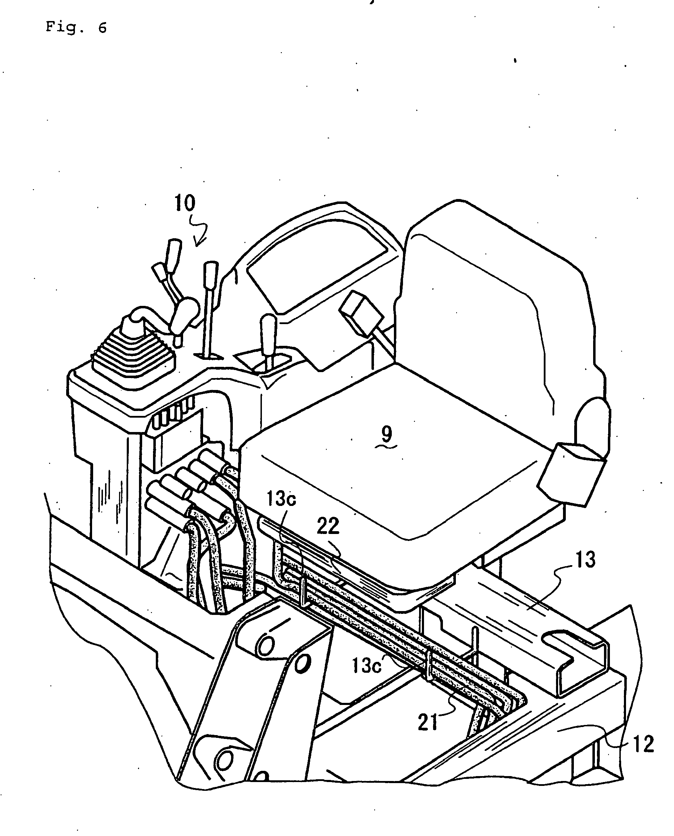

The configuration near the operator's seat will now be described using Figs. 6 to 8.

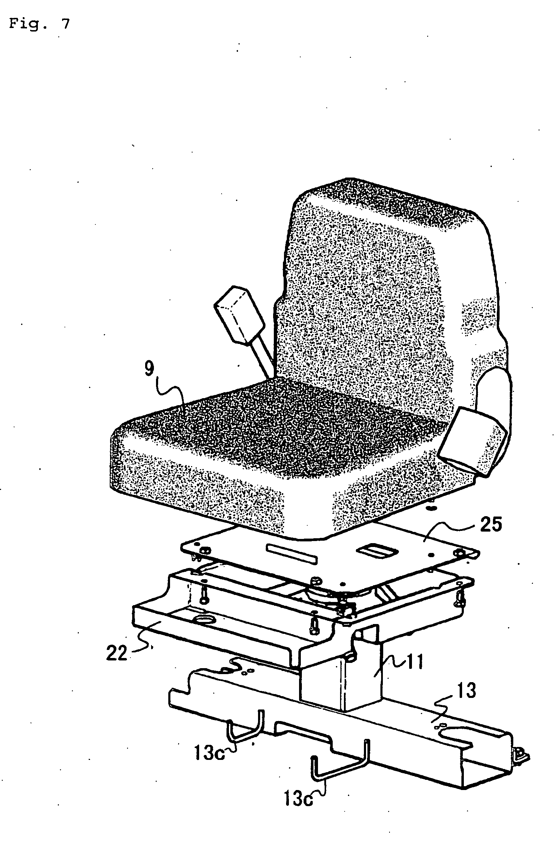

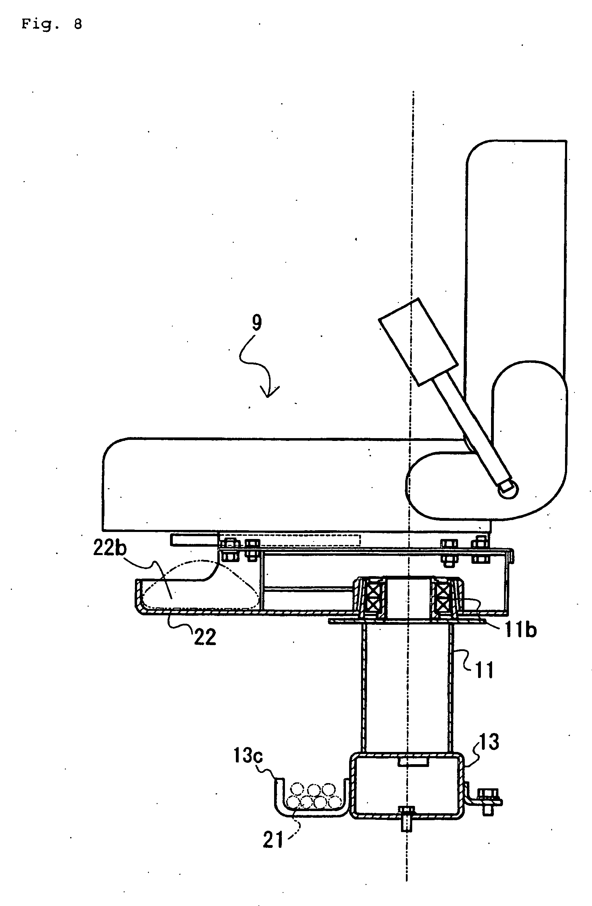

Fig. 6 is a perspective view showing the structure of the operator's seat and a piping layout, Fig. 7 is a perspective exploded view showing the structure of the operator' s seat, and Fig. 8 is a cross sectional side view of an operator's seat support structure.

The seat 9 is supported on the beam 13 by way of the seat pillar 11, and the beam 13 is fixed to the vehicle body frame 12. The operation unit 10 arranged on the side of the seat 9 is also arranged on the vehicle body frame 12. The operation unit 10 is equipped with operation tools such as lever for operating the work machine and the like, which operation tools are connected to a control valve arranged in the operation unit 10. A hydraulic hose 21 is connected to the operation unit 10, and the hydraulic hose 21 introduced into the operation unit 10 is connected to the control valve.

The hydraulic hose 21 is arranged so as to traverse the work vehicle in the left and right direction. The hydraulic hose 21 is arranged along the beam 13. Hooks 13c are installed on the front surface of the beam 13. The hydraulic hose 21 can be arranged on the exterior side of the vehicle body frame 12 by arranging the hooks 13c serving as guides for passing the hydraulic hose 21, which extends from the control valve of the operation unit 10 to the hydraulic cylinder of the work machine attached to the vehicle, to the beam 13 arranged across the vehicle body frames 12.

The hook 13c fixed to the beam 13 has the upper side opened, and engages the hydraulic hose 21 when the hydraulic hose 21 is arranged on the hook 13c. Thus, the hydraulic hose 21 is arranged in the left and right direction of the machine, and is arranged in an easily visible state on the side of the beam 12. Steps etc. are arranged on the upper side of the hook 13c, and the hydraulic hose 21 is protected by the steps.

The configuration of the seat 9 will now be described.

The seat 9 is arranged on a stand frame 22, and the seat 9 can be sled forward and backward with respect to the stand frame 22 to adjust the front and back position of the seat 9. The stand frame 22 is attached to the upper end of the seat pillar 11 by way of a bearing 11b.

The seat 9 is arranged so that the seat index point (hereinafter referred to as SIP) at the center of the seat slide and the central rotating axis of the seat are coaxial. The SIP (seat index point) is defined in ISO 5353.

A phantom line in Fig. 8 shows the rotating axis of the seat 9 and the position of the SIP.

Thus, the load acting on the seat pillar 11, which acts as the rotating axis of the seat 9, and the bearing 11b is reduced.

The moment including the operator when rotating the seat 9 is made small, and the rotation of the seat 9 is facilitated since the SIP that acts as the center of body axis of the operator sitting on the seat 9 and the rotating axis of the seat 9 are arranged coaxially or as close as possible.

The stand frame 22 is formed into a box shape with the upper part opened, a partition is arranged at the middle in the front and back direction, and the back upper part from the partition is covered by a plate 25. The front upper part of the stand frame 22 is opened which area is used as the storage part 22b that is used by being taken out from and put in between the front lower surface of the seat 9 and the front end of the stand frame 22.

The stand frame 22 rotates together with the seat 9, and the storage part 22b is formed in the stand frame 22, whereby the storage part 22b is positioned under the front part of the seat 9 even when the seat 9 is rotated. Thus, the positional relationship between the operator sitting on the seat 9 and the storage part 22b is maintained, so that the instruction manual, tool etc. can be taken out while facing the front without twisting the body, thereby configuring a user-friendly storage part 22b.

A space is formed under the seat 9 since the seat 9 is supported in a freely rotatable manner by the seat pillar 11 while being attached to the stand frame 22. The foot space for the operator is thereby ensured.

The stand frame 22 is simplified, and assembly property between the stand frame 22 and the seat 9 as well as the assembly property between the stand frame 22 and the seat pillar 11 are enhanced by supporting the seat 9 by such a configuration. Furthermore, the maintenance of under the seat is enhanced, and the rotating operation of the seat 9 is easily performed.

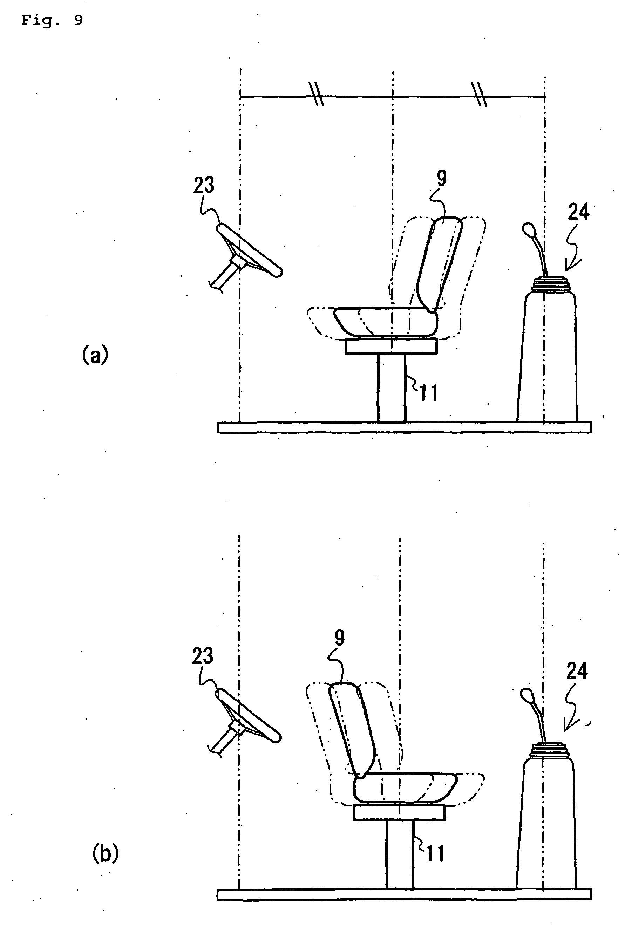

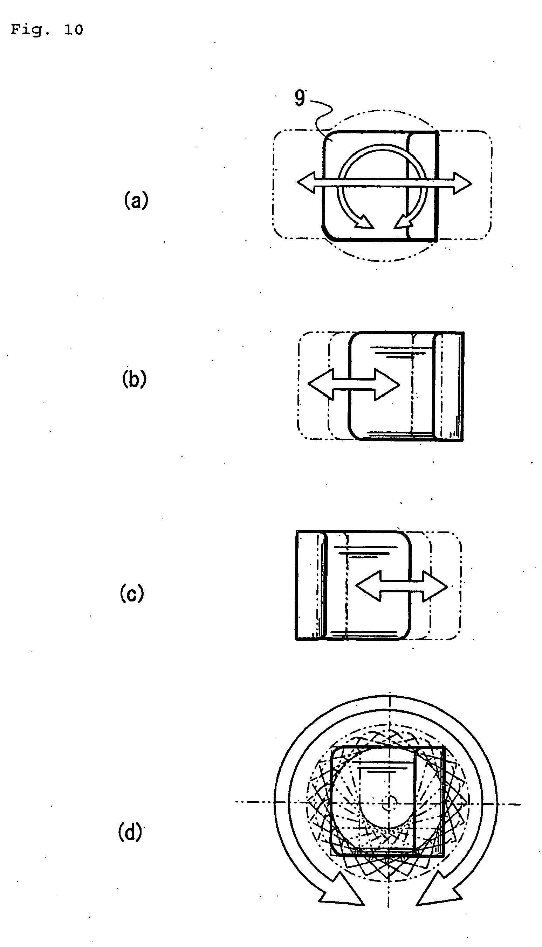

The rotating configuration of the seat 9 will now be described using Figs. 9 and 10.

Fig. 9(a) and (b) are views each showing the position relationship between the steering control device and the seat, Fig. 9 (a) being a view showing the state of the seat when operating the steering control device, Fig. 9(b) being a view showing a state of the seat when operating the work machine; Fig. 10(a) to (d) are views each showing a structure of the front and back position adjustment of the seat and the seat rotation, Fig. 10 (a) being a view showing the position adjustment range of the seat, Fig. 10 (b) being a view showing the configuration of the front and back position adjustment with the seat facing the front, Fig. 10 (c) being a view showing the configuration of the front and back position adjustment with the seat facing the back, and Fig. 10(d) being a view showing the seat rotating state.

The seat pillar 11 is positioned in the intermediate position between the steering 23 serving as the steering control device and the operation lever 24 serving as the work machine operation device, and rotating axis of the seat 9 is also at the intermediate position between the steering 23 and the operation lever 24. Therefore, the preferred seat position of the operator can be realized by similarly adjusting the front and back position of the seat 9 even when operating the steering 23 or even when operating the operation lever 24. That is, the operation after reverse rotation of the seat 9 can be easily performed without taking into consideration whether the operator is facing forward or facing backward.

The seat 9 has a configuration of being rotated with the rotating axis approximately coinciding with the SIP of the seat 9. That is, when reversely rotating the seat 9, the seat 9 is rotated in a state returned to the central position of the forward and backward slide. The SIP of the seat 9 approximately aligns with the rotating axis of the seat 9 with the seat 9 at the central position of the forward and backward slide. Thus, the spacing between the steering 23 and the seat 9, and the spacing between the operation lever 24 and the seat 9 after rotation become the same, and operation can be performed at the same posture. The spacing between the rear frame 8 and the knee when rotating towards the front or towards the back is also widely formed. Thus, the interference between the seat 9 and the operation unit 10 is avoided even if the operation unit 10 is arranged on the side of the seat 9. That is, the seat 9 is configured avoid contact with other members in a space within the cabin.

Moreover, the seat pillar 11 supports the seat 9 at the lower side of the SIP during rotation, and the seat 9 is reliably supported by the seat pillar 11, whereby the durability of the seat 9 increases since excess load is not applied to the seat pillar 11, the bearing 11b, the stand frame 22 and the like.

### INDUSTRIAL APPLICABILITY

In the operator's seat of the work vehicle of the present invention, a storage part that can be easily accessed from a sitting state is widely provided in the work vehicle, the operator's seat being rotatable while sitting through a natural operation.

## Claims

1. A work vehicle (1) with an operator's seat (9),
wherein
a seat support member is disposed on a machine frame (12) of the work vehicle (1);
a stand frame (22) is rotatably provided on the seat support member; the operator's seat (9) is provided on the stand frame (22) slidable towards the front and the back;
a seat index point of the operator's seat (9) serving as the center position of the sliding range of the operator's seat (9) is approximately coaxial with the rotating center axis (9b) of the operator's seat (9),
a first operation member (23) is disposed in front of the operator's seat (9) to be operated by an operator sitting on the seat (9);
a second operation member (24) is disposed behind the operator's seat (9) to be operated by an operator sitting on the seat (9); and
a distance between the first operation member (23) and the rotating center axis (9b) is equal to a distance between the second operation member (24) and the rotating center axis (9b),
**characterized in that** the seat support member comprises a beam (13) laterally arranged across right and left vehicle frames (12), and comprises a seat pillar (11) surrounding the rotating center axis (9b) and erected on the beam (13), wherein the stand frame (22) is rotatably provided on a top of the seat pillar (11) so as to ensure a space around the seat pillar (11) below the stand frame (22).

2. The work vehicle with an operator's seat according to claim 1, wherein a storage part (22b) is installed on the stand frame (22) under a front lower seat surface of the operator's seat (9) so as to be rotatable together with the operator's seat (9).

3. The work vehicle with an operator's seat according to claim 1, wherein the beam (13) includes a side surface extended between the right and left vehicle frames (12), and a hose holding part (13c) is provided on said side surface of the beam (13), so that a hydraulic hose (21) held by the hose holding part (13c) is held along the side surface of the seat support member.

4. The work vehicle with an operator's seat according to claim 1, wherein the work vehicle (1) is provided with a canopy (5) surrounding the seat pillar (11), the stand frame (22) and the seat (9), wherein the canopy (5) includes frames (9) extended upward from the respective right and left vehicle frames (12), and wherein each of the frames (9) of the canopy (5) is bent at a vertical intermediate bent portion (8t) whose height is substantially equal to a height (9h) of a surface of the seat (9) on which an operator sits.

## Patentansprüche

1. Arbeitsfahrzeug (1) mit einem Bedienersitz (9),
bei dem
an einem Maschinenrahmen (12) des Arbeitsfahrzeugs (1) ein Sitzstützelement angeordnet ist;
an dem Sitzstützelement drehbar ein Untersatzrahmen (22) vorgesehen ist;
der Bedienersitz (9) an dem Untersatzrahmen (22) nach vorn und hinten gleitfähig vorgesehen ist;
ein Sitzindexpunkt des Bedienersitzes (9), der als die Mittelstellung des Gleitbereichs des Bedienersitzes (9) dient, näherungsweise koaxial zur Drehmittelachse (9b) des Bedienersitzes (9) ist,
vor dem Bedienersitz (9) ein erstes Betätigungselement (23) angeordnet ist, um durch einen auf dem Sitz (9) sitzenden Bediener betätigt zu werden;
hinter dem Bedienersitz (9) ein zweites Betätigungselement (24) angeordnet ist, um durch einen auf dem Sitz (9) sitzenden Bediener betätigt zu werden; und
eine Entfernung zwischen dem ersten Betätigungselement (23) und der Drehmittelachse (9b) gleich einer Entfernung zwischen dem zweiten Betätigungselement (24) und der Drehmittelachse (9b) ist,
**dadurch gekennzeichnet, dass** das Sitzstützelement einen Träger (13) umfasst, der quer über den rechten und den linken Fahrzeugrahmen (12) angeordnet ist, und eine Sitzsäule (11) umfasst, die die Drehmittelachse (9b) umgibt und auf dem Träger (13) aufgerichtet ist, wobei der Untersatzrahmen (22) auf der Sitzsäule (11) drehbar vorgesehen ist, um unter dem Untersatzrahmen (22) einen Raum um die Sitzsäule (11) sicherzustellen.

2. Arbeitsfahrzeug mit einem Bedienersitz nach Anspruch 1, bei dem an dem Untersatzrahmen (22) unter einer vorderen unteren Sitzoberfläche des Bedienersitzes (9) ein Ablageteil (22b) in der Weise eingebaut ist, dass es zusammen mit dem Bedienersitz (9) drehbar ist.

3. Arbeitsfahrzeug mit einem Bedienersitz nach Anspruch 1, bei dem der Träger (13) eine seitliche Oberfläche enthält, die zwischen dem rechten und dem linken Fahrzeugrahmen (12) verläuft, und bei dem an der seitlichen Oberfläche des Trägers (13) ein Schlauchhalteteil (13c) in der Weise vorgesehen ist, dass ein Hydraulikschlauch (21), der durch das Schlauchhalteteil (13c) gehalten ist, entlang der seitlichen Oberfläche des Sitzstützelements gehalten ist.

4. Arbeitsfahrzeug mit einem Bedienersitz nach Anspruch 1, bei dem das Arbeitsfahrzeug (1) mit einem Kabinendach (5) versehen ist, das die Sitzsäule (11), den Untersatzrahmen (22) und den Sitz (9) umgibt, wobei das Kabinendach (5) Rahmen (8) enthält, die von dem jeweiligen rechten und linken Fahrzeugrahmen (12) nach oben verlaufen, und wobei jeder der Rahmen (8) des Kabinendachs (5) in einem vertikalen gebogenen Zwischenabschnitt (8t) gebogen ist, dessen Höhe im Wesentlichen gleich einer Höhe (9h) einer Oberfläche des Sitzes (9) ist, auf dem ein Bediener sitzt.

## Revendications

1. Véhicule de travail (1) avec un siège de conducteur (9),
dans lequel
un élément de support de siège est disposé sur un châssis de machine (12) du véhicule de travail (1) ;
un cadre de support (22) est prévu à rotation sur l'élément de support de siège ;
le siège de conducteur (9) est prévu sur le cadre de support (22) à coulissement vers l'avant et l'arrière ;
un point de référence de siège du siège de conducteur (9) servant de position centrale de la plage de coulissement du siège de conducteur (9) est approximativement coaxial avec l'axe de rotation central (9b) du siège de conducteur (9) ; un premier élément d'opération (23) est disposé devant le siège de conducteur (9) pour être opéré par un conducteur assis sur le siège (9) ;
un second élément d'opération (24) est disposé derrière le siège de conducteur (9) pour être opéré par un conducteur assis sur le siège (9) ; et
une distance entre le premier élément d'opération (23) et l'axe de rotation central (9b) est égale à une distance entre le second élément d'opération (24) et l'axe de rotation central (9b),
**caractérisé en ce que** l'élément de support de siège comprend une poutre (13) agencée latéralement en travers des châssis droit et gauche (12) du véhicule, et comprend une colonne de siège (11) entourant l'axe de rotation central (9b) et érigée sur la poutre (13), dans lequel le cadre de support (22) est prévu à rotation sur le dessus de la colonne de siège (11) de manière à garantir un espace autour de la colonne de siège (11) en dessous du cadre de support (22).

2. Véhicule de travail avec un siège de conducteur selon la revendication 1, dans lequel une partie de stockage (22b) est installée sur le cadre de support (22) sous une surface de siège inférieure avant du siège de conducteur (9) de manière à être rotative avec le siège de conducteur (9).

3. Véhicule de travail avec un siège de conducteur selon la revendication 1, dans lequel la poutre (13) inclut une surface latérale s'étendant entre les châssis droit et gauche (12) du véhicule, et une partie support de tuyau (13c) est prévue sur ladite surface latérale de la poutre (13), de telle sorte qu'un tuyau hydraulique (21) maintenu par la partie support de tuyau (13c) soit maintenu le long de la surface latérale de l'élément de support de siège.

4. Véhicule de travail avec un siège de conducteur selon la revendication 1, dans lequel le véhicule de travail (1) est pourvu d'une cabine (5) entourant la colonne de siège (11), le cadre de support (22) et le siège (9), dans lequel la cabine (5) inclut des châssis (8) étendus vers le haut depuis les châssis droit et gauche respectifs (12) du véhicule, et dans lequel chacun des châssis (8) de la cabine (5) est courbé au niveau d'une portion courbée intermédiaire verticale (8t) dont la hauteur est sensiblement égale à une hauteur (9h) d'une surface du siège (9) sur lequel un conducteur s'assoie.
